(19) Europäisches Patentamt
European Patent Office
Office européen des brevets

(11) **EP 4 502 494 A1**

(12) **EUROPEAN PATENT APPLICATION**
published in accordance with Art. 153(4) EPC

(43) Date of publication:
**05.02.2025  Bulletin 2025/06**

(21) Application number: 23775036.9

(22) Date of filing: **23.03.2023**

(51) International Patent Classification (IPC):
*F25B 1/00* (2006.01)          *C09K 5/04* (2006.01)
*C10M 101/00* (2006.01)      *C10M 105/06* (2006.01)
*C10M 105/38* (2006.01)      *C10M 107/24* (2006.01)
*C10N 40/30* (2006.01)

(52) Cooperative Patent Classification (CPC):
C09K 5/04; C10M 101/00; C10M 105/06;
C10M 105/38; C10M 107/24; F25B 1/00

(86) International application number:
**PCT/JP2023/011605**

(87) International publication number:
**WO 2023/182442 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  25.03.2022  PCT/JP2022/014635

(71) Applicant: **MITSUBISHI ELECTRIC
CORPORATION**
**Chiyoda-ku**
**Tokyo 100-8310 (JP)**

(72) Inventors:
• **TASHIRO, Yusuke**
  **Tokyo 100-8310 (JP)**
• **MATSUDA, Takuya**
  **Tokyo 100-8310 (JP)**
• **MAEYAMA, Hideaki**
  **Tokyo 100-8310 (JP)**
• **GOMAE, Naohisa**
  **Tokyo 100-8310 (JP)**

(74) Representative: **Pfenning, Meinig & Partner mbB
Patent- und Rechtsanwälte
An der Frauenkirche 20
01067 Dresden (DE)**

(54) **REFRIGERATION CYCLE DEVICE**

(57)      A refrigeration cycle apparatus includes a refrigeration circuit including a compressor. Refrigerant is sealed in the refrigeration circuit. Refrigerant contains a first component and a second component. The first component consists of 1,1,2-trifluoroethylene. The second component consists of at least one selected from the group consisting of hydrocarbon having a carbon number not smaller than 1 and not larger than 5 and fluorinated hydrocarbon having a carbon number not smaller than 1 and not larger than 5. A content $C_1$ based on a mass of the first component in refrigerant is not lower than 50 mass %. A percentage $(C_2/C_1) \times 100$ of a content $C_2$ based on a mass of the second component to the content $C_1$ based on the mass of the first component in refrigerant is not lower than 15% and lower than 50%. The compressor is filled with compressor oil. Compressor oil is compatible with the second component.

FIG.3

TEMPERATURE [K] GENERATED AT TIME OF DISPROPORTIONATION REACTION OF HFO-1123

R32 or R290 MIXING RATIO [MASS %]

**Description**

TECHNICAL FIELD

The present disclosure relates to a refrigeration cycle apparatus.

BACKGROUND ART

From a point of view of prevention of global warming, reduction in greenhouse gas has recently been demanded. With regard also to refrigerant used in a refrigeration cycle apparatus such as an air-conditioner, refrigerant having a lower global warming potential (GWP) has been studied. For such refrigerant, 1,1,2-trifluoroethylene (which will also be denoted as HFO-1123 below) has been studied (for example, PTL 1).

CITATION LIST

PATENT LITERATURE

PTL 1: WO2012/157764

SUMMARY OF INVENTION

TECHNICAL PROBLEM

HFO-1123, however, is likely to cause disproportionation reaction in a high-temperature and high-pressure state. Therefore, a technique to suppress the disproportionation reaction of HFO-1123 has been demanded.
An object of the present disclosure is to provide a refrigeration cycle apparatus capable of achieving suppression of disproportionation reaction of HFO-1123.

SOLUTION TO PROBLEM

A refrigeration cycle apparatus according to the present disclosure includes a refrigeration circuit including a compressor. Refrigerant is sealed in the refrigeration circuit. Refrigerant contains a first component and a second component. The first component consists of 1,1,2-trifluoroethylene. The second component consists of at least one selected from the group consisting of hydrocarbon having a carbon number not smaller than 1 and not larger than 5 and fluorinated hydrocarbon having a carbon number not smaller than 1 and not larger than 5. A content $C_1$ based on a mass of the first component in refrigerant is not lower than 50 mass %. A percentage $(C_2/C_1) \times 100$ of a content $C_2$ based on a mass of the second component to the content $C_1$ based on the mass of the first component in refrigerant is not lower than 15% and lower than 50%. The compressor is filled with compressor oil. Compressor oil is compatible with the second component.

ADVANTAGEOUS EFFECTS OF INVENTION

According to the present disclosure, a refrigeration cycle apparatus capable of achieving suppression of disproportionation reaction of HFO-1123 can be provided.

BRIEF DESCRIPTION OF DRAWINGS

Fig. 1 is a schematic configuration diagram showing a refrigeration cycle apparatus according to a first embodiment.
Fig. 2 is a cross-sectional view of a compressor according to the first embodiment.
Fig. 3 shows a graph of relation between a ratio of mixing of propane (R290) or difluoromethane (R32) and a temperature generated at the time of disproportionation reaction of HFO-1123.
Fig. 4 shows a graph of relation between a degree of superheat of compressor oil (for example, PVE oil) and an amount of dissolution of HFO-1123 and propane (R290) dissolved in compressor oil.

DESCRIPTION OF EMBODIMENTS

An embodiment of the present disclosure will be described below with reference to the drawings.

First Embodiment.

<Refrigeration Cycle Apparatus>

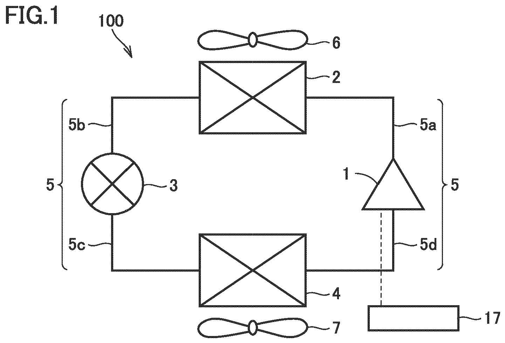

Overview of a refrigeration cycle apparatus in the present embodiment will be described. The refrigeration cycle apparatus in the present embodiment includes a refrigeration circuit including a compressor. Fig. 1 is a schematic configuration diagram showing a refrigeration cycle apparatus according to a first embodiment. A refrigeration cycle apparatus 100 can include a refrigeration circuit 5 including a compressor 1, a condenser 2, an expansion valve 3, and an evaporator 4. Compressor 1 and condenser 2 are connected to each other through a refrigerant pipe 5a, condenser 2 and expansion valve 3 are connected to each other through a refrigerant pipe 5b, expansion valve 3 and evaporator 4 are connected to each other through a refrigerant pipe 5c, and evaporator 4 and compressor 1 are connected to each other through a refrigerant pipe 5d. Refrigerant is sealed in refrigeration circuit 5. Refrigerant sequentially circulates through compressor 1, refrigerant pipe 5a, condenser 2, refrigerant pipe 5b, expansion valve 3, refrigerant pipe 5c, evaporator 4, refrigerant pipe 5d, and compressor 1.

Compressor 1 suctions refrigerant, compresses refrigerant into a high-temperature and high-pressure gas state, and discharges compressed refrigerant. The number of rotations of compressor 1 is controlled, for example, by an inverter circuit or the like. As the number of rotations is controlled, an amount of discharge of refrigerant is adjusted.

Refrigerant compressed in compressor 1 into the high-temperature and high-pressure gas state flows into condenser 2. Condenser 2 causes heat exchange between refrigerant and a heat source to cool refrigerant to a low-temperature and high-pressure liquid state. Examples of the heat source include air, water, and brine. In the first embodiment, the heat source of condenser 2 is outside air which is air outdoors. Condenser 2 causes heat exchange between outside air and refrigerant. Furthermore, in the first embodiment, in order to accelerate heat exchange in condenser 2, a condenser blower 6 to blow outside air toward condenser 2 is provided. Condenser blower 6 is capable of air volume regulation.

Refrigerant in the low-temperature and high-pressure liquid state cooled in condenser 2 flows into expansion valve 3. Expansion valve 3 expands by pressure reduction, refrigerant to a low-temperature and low-pressure liquid state. Expansion valve 3 is implemented, for example, by refrigerant flow rate control means such as an electronic expansion valve or a thermostatic expansion valve or a capillary (capillary tube).

Refrigerant in the low-temperature and low-pressure liquid state expanded by pressure reduction in expansion valve 3 flows into evaporator 4. Heat is exchanged between refrigerant and an object to be cooled and heat of the object is absorbed by refrigerant, so that the object is cooled. In cooling of the object to be cooled, refrigerant evaporates and enters a high-temperature and low-pressure gas state. In the first embodiment, the object to be cooled is air indoors, and evaporator 4 causes heat exchange between indoor air and refrigerant. Furthermore, in the first embodiment, in order to accelerate heat exchange in evaporator 4, an evaporator blower 7 that blows indoor air toward evaporator 4 is provided. Evaporator blower 7 is capable of air volume regulation.

Compressor 1 suctions refrigerant in the high-temperature and low-pressure gas state in evaporator 4 and compresses refrigerant again. Refrigerant thus circulates through refrigeration cycle apparatus 100.

Refrigeration cycle apparatus 100 can include a controller 17. Controller 17 is, for example, a microcomputer. Though Fig. 1 shows only connection between controller 17 and compressor 1, controller 17 is connected not only to compressor 1 but also to each of condenser 2, expansion valve 3, and evaporator 4.

Controller 17 controls a pressure and/or a temperature of refrigerant that circulates through refrigeration cycle apparatus 100 to a condition under which disproportionation reaction of refrigerant (HFO-1123) does not occur or chain disproportionation reaction can be suppressed. For example, the controller controls the pressure and/or the temperature such that the pressure of refrigerant in a flow channel from compressor 1 to expansion valve 3 (that is, on a high-pressure side) does not attain to a pressure equal to or higher than a certain level. Then, even when disproportionation reaction occurs in a part of refrigeration cycle apparatus 100 such as compressor 1, spread thereof can be prevented.

The temperature and/or pressure condition under which disproportionation reaction of refrigerant does not occur or propagation of disproportionation reaction can be suppressed can be set as appropriate based on a component of refrigerant.

Refrigeration cycle apparatus 100 may be, for example, any of an apparatus capable of both of cooling and heating, an apparatus capable only of cooling, and an apparatus capable only of heating, and can be applied to various types of refrigeration air-conditioning apparatus.

<<Refrigerant>>

In the present embodiment, refrigerant is sealed in the refrigeration circuit. Refrigerant contains a first component and a second component. The first component consists of 1,1,2-trifluoroethylene (HFO-1123). HFO-1123 has a low GWP lower than 1, is high in operating pressure, and low in refrigerant volume flow rate, and hence it can be less in pressure loss and excellent in cycle performance. A content C1 (which is also denoted as "content C1 of the first component" below) based on a mass of the first component in refrigerant is not lower than 50 mass %. Refrigerant can thus have a low GWP and excellent cycle performance.

Content C1 of the first component in refrigerant is not lower than 50 mass %, and can be not lower than 50 mass % and not higher than 85 mass %, not lower than 70 mass % and not higher than 85 mass %, and not lower than 80 mass % and not higher than 85 mass %.

In the present disclosure, content C1 based on the mass of the first component in refrigerant sealed in the refrigeration circuit refers to the content based on the mass of the first component in refrigerant before activation of the refrigeration cycle apparatus including the refrigeration circuit. Content C1 of the first component is regarded as being equal to the content based on the mass of the first component in refrigerant before refrigerant is sealed in the refrigeration circuit. In other words, the content based on the mass of the first component in refrigerant in a refrigerant cylinder filled with refrigerant to be sealed in the refrigeration circuit is regarded as being equal to content C1 based on the mass of the first component in refrigerant sealed in the refrigeration circuit, which is also applicable to a content C2 (which is also denoted as "content C2 of the second component" below) based on a mass of the second component in refrigerant and a content C3 (which is also denoted as a "content C3 of the second component" below) based on a mass of a third component in refrigerant.

The second component consists of at least one selected from the group consisting of hydrocarbon having a carbon number not smaller than 1 and not larger than 5 and fluorinated hydrocarbon having a carbon number not smaller than 1 and not larger than 5.

The second component, by being mixed with HFO-1123, can suppress disproportionation reaction of HFO-1123. In the present disclosure, suppression of disproportionation reaction of HFO-1123 means suppression of propagation of disproportionation reaction of HFO-1123.

A percentage $(C2/C1) \times 100$ of content C2 based on the mass of the second component to content C1 based on the mass of the first component in refrigerant is not lower than 15% and lower than 50%. Even a small amount of the second component is excellent in effect of suppression of disproportionation reaction of HFO-1123. Therefore, when the percentage $(C2/C1) \times 100$ is not lower than 15%, the excellent effect of suppression of disproportionation reaction of HFO-1123 can be obtained. With the percentage $(C2/C1) \times 100$ being lower than 50%, the content of HFO-1123 in refrigerant can be increased. Therefore, refrigerant has the low GWP, and the refrigeration cycle apparatus including the refrigeration circuit in which such refrigerant is sealed can be excellent in cycle performance.

Japanese Patent Laying-Open No. 2018-112396 discloses a technique to mix R32 (difluoromethane) with HFO-1123 for the purpose of suppression of disproportionation reaction of HFO-1123. According to the technique in this patent literature, however, in order to suppress chain disproportionation reaction in actual use, an amount of R32 in refrigerant should be increased. For example, an example where HFO-1123 accounts for 40% and R32 accounts for 60% is shown, and a ratio of R32 is higher than a ratio of HFO-1123. Therefore, such characteristics of HFO-1123 as the low GWP, the high operating pressure, and the low refrigerant volume flow rate leading to less pressure loss and readiness to ensure performance are greatly compromised.

On the other hand, the percentage $(C2/C1) \times 100$ of the second component to HFO-1123 in the present embodiment is lower than the percentage of R32 to HFO-1123 in the patent literature, however, the excellent effect of suppression of disproportionation reaction of HFO-1123 can be obtained. Since the ratio of the second component in refrigerant can be low and the ratio of HFO-1123 can be high in the present embodiment, such characteristics of HFO-1123 as the low GWP, the high operating pressure, and the low refrigerant volume flow rate leading to less pressure loss and readiness to ensure performance can be obtained.

The percentage $(C2/C1) \times 100$ is not lower than 15% and lower than 50%, and can be not lower than 10% and not higher than 30%, not lower than 10% and not higher than 15%, not lower than 15% and not higher than 30%, and not lower than 15% and not higher than 20%.

The second component preferably consists of at least one selected from the group consisting of propane ($C_3H_8$, R290), methane ($CH_4$), ethane ($C_2H_6$), butane ($C_4H_{10}$), isobutane (iso-$C_4H_{10}$), propylene ($C_3H_6$), fluoromethane ($CH_3F$, R41), fluoroethane ($C_2H_5F$, R161), and 1,1-difluoroethane ($C_2H_4F_2$, R152a). These compounds are excellent in effect of suppression of disproportionation reaction of HFO-1123. In addition, these compounds have low GWPs (for example, propane having the GWP of 6). Therefore, even when these compounds are mixed with HFO-1123, the GWP of refrigerant as a whole can be kept low.

The second component can consist of one of the compounds above. Alternatively, the second component can consist of at least two of the compounds above.

The second component preferably does not contain difluoromethane and difluoroiodomethane. Difluoromethane has a high GWP of 675 (see the IPCC fourth assessment report). On the other hand, HFO-1123 which is the first component has the low GWP lower than 1. Therefore, when the percentage (C2/C1)×100 of content C2 based on the mass of the second component which is difluoromethane to content C1 based on the mass of the first component in mixed refrigerant containing the first component and the second component is not lower than 15% and lower than 50%, the GWP of the mixed refrigerant tends to be high, for example, the GWP having two or more digits. Such mixed refrigerant having the high GWP is inconsistent with one of objects of the present disclosure to provide refrigerant having the low GWP. Since C-I bond of difluoroiodomethane is weaker than C-H bond, C-F bond, and C-Cl bond of conventional refrigerant similarly to trifluoroiodomethane, difluoroiodomethane is expected to have high metal reactivity, and hence it is not suitable as a component for mixed refrigerant. Refrigerant preferably does not contain difluoromethane and difluoroiodomethane.

From a point of view of improvement in effect of suppression of disproportionation reaction of HFO-1123, a range of the percentage (C2/C1)×100 is preferably selected as appropriate for each composition of the second component. When the second component is propane, the percentage (C2/C1)×100 is not lower than 15% and lower than 50%, preferably not lower than 15% and not higher than 30%, and more preferably not lower than 15% and not higher than 20%. When the second component is butane, the percentage (C2/C1)×100 is not lower than 15% and lower than 50%, preferably not lower than 10% and not higher than 30%, and more preferably not lower than 10% and not higher than 15%. When the second component is isobutane, the percentage (C2/C1)×100 is not lower than 15% and lower than 50%, preferably not lower than 10% and not higher than 30%, and more preferably not lower than 10% and not higher than 15%.

For deeper understanding of the present disclosure, details of the effect of suppression of disproportionation reaction of HFO-1123 by the second component will be described below. Though an example where propane (R290) is employed as the second component will be described below, the description below is also applied to the second component other than propane.

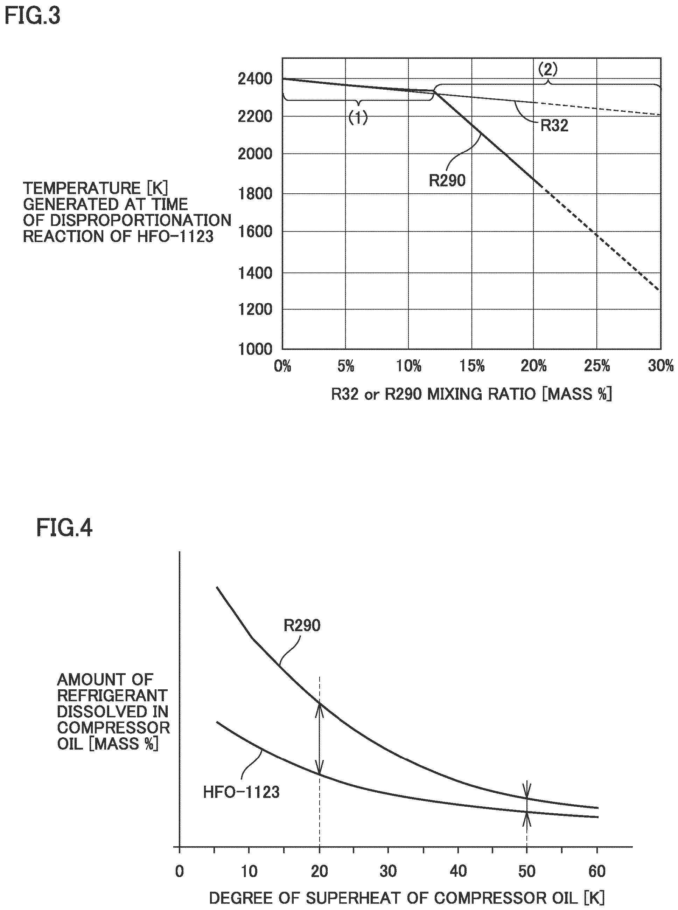

Fig. 3 shows a graph of relation between a ratio of mixing of propane (R290) or difluoromethane (R32) and a temperature generated at the time of disproportionation reaction of HFO-1123 in an example where propane (R290) or difluoromethane (R32) is mixed with HFO-1123. Difluoromethane (R32) is refrigerant mixing of which with HFO-1123 has conventionally been studied. In the graph, "R32 or R290 mixing ratio [mass %]" on the abscissa represents the ratio of mixing of R32 or R290 with the mass of HFO-1123 being defined as 100%. For example, the ratio of mixing of R290 being 15% means mixing of 15 mass % of R290 with 100 mass % of HFO-1123. In the graph, "temperature [K] generated at time of disproportionation reaction of HFO-1123" on the ordinate represents a temperature [K] generated with disproportionation reaction of HFO-1123 at the ratio of mixing of R32 or R290 shown on the abscissa. "Temperature [K] generated at time of disproportionation reaction of HFO-1123" is a temperature at a pressure of 6 MPa. As the temperature generated at the time of disproportionation reaction of HFO-1123 is lower, propagation of disproportionation reaction is more readily suppressed.

As shown in Fig. 3, when propane (R290) is mixed with HFO-1123, at the ratio of mixing of propane equal to or higher than approximately 12%, the temperature generated at the time of disproportionation reaction of HFO-1123 abruptly lowers with increase in mixing ratio. Therefore, it is confirmed that the effect of suppression of disproportionation reaction of HFO-1123 is high when the ratio of mixing of propane with HFO-1123 is not lower than 15%.

On the other hand, when difluoromethane (R32) is mixed with HFO-1123, in spite of increase in ratio of mixing of difluoromethane, the temperature generated at the time of disproportionation reaction of HFO-1123 lowers only slightly. Therefore, in order to obtain the effect of suppression of disproportionation reaction by mixing difluoromethane (R32) with HFO-1123, the ratio of mixing of difluoromethane should be increased. Increase in ratio of mixing of difluoromethane, however, leads to increase in GWP, and the refrigeration cycle apparatus including the refrigeration circuit in which such refrigerant is sealed lowers in cycle performance.

As described above, propane (R290) smaller in amount than difluoromethane (R32) can obtain the effect of suppression of disproportionation reaction of HFO-1123. Therefore, refrigerant containing R290 for suppression of disproportionation reaction of HFO-1123 can maintain excellent performance of HFO-1123 and can have the low GWP, and the refrigeration cycle apparatus including the refrigeration circuit in which such refrigerant is sealed is satisfactory in cycle performance.

A function of propane (R290) at the time of occurrence of disproportionation reaction can be explained by change in manner of chemical reaction. HFO-1123 has been known to cause disproportionation reaction shown in a formula (A) below.

$$CF_2 = CHF \rightarrow 1.5C + 0.5CF_4 + HF + 250 \text{ kJ/mol} \qquad (A)$$

In a range of the ratio of mixing of R290 not higher than approximately 12% (a section shown with (1) in Fig. 3) where the effect of suppression of the temperature generated at the time of disproportionation reaction is small, chemical reaction shown in a formula (B) below is dominant.

$$C_3H_8 + 2CF_4 = 8HF + 5C \, [gr] + 212 \, kJ/mol \qquad (B)$$

In the chemical reaction shown in the formula (B), heat of reaction is great and new reaction propagation tends to be induced, and hence the effect of suppression of disproportionation reaction of HFO-1123 is small.

In a range of the ratio of mixing of R290 exceeding approximately 12% (a section shown with (2) in Fig. 3) where the effect of suppression of the temperature generated at the time of disproportionation reaction is great, chemical reaction shown in a formula (C) below is dominant.

$$C_3H_8 = 2CH_4 + C \, [gr] + 45 \, kJ/mol \qquad (C)$$

In the chemical reaction shown in the formula (C), heat of reaction is low and energy for generation of new reaction propagation is low, and hence the effect of suppression of disproportionation reaction of HFO-1123 is great.

The chemical reaction having a tendency as in the formula (B) and the formula (C) above occurs also when a compound other than propane, specifically hydrocarbon having a carbon number not smaller than 1 and not larger than 5 and fluorinated hydrocarbon having a carbon number not smaller than 1 and not larger than 5, is employed as the second component.

Which of the chemical reaction shown in the formula (B) and the chemical reaction shown in the formula (C) is dominant is estimated to be affected by a ratio between hydrogen (H) and fluorine (F) present in refrigerant. It is estimated that, when the ratio H/F exceeds 1, the dominant chemical reaction tends to change from the formula (B) to the formula (C) above, the temperature generated at the time of disproportionation reaction is lowered, and the effect of suppression of propagation of disproportionation reaction is improved.

In the present embodiment, refrigerant can consist of the first component and the second component. Refrigerant can contain an impurity in addition to the first component and the second component so long as it exhibits the effect of the present disclosure. In other words, in the present embodiment, refrigerant can consist of the first component, the second component, and the impurity.

When refrigerant consists of the first component and the second component, content C1 based on the mass of the first component in refrigerant can be not lower than 70 mass % and not higher than 85 mass %, not lower than 75 mass % and not higher than 85 mass %, and not lower than 80 mass % and not higher than 85 mass %.

Refrigerant can further contain a third component in addition to the first component and the second component. The third component will be described in detail in a second embodiment which will be described later.

<<Compressor>>

The compressor of the refrigeration cycle apparatus according to the first embodiment will be described. In the present embodiment, a compressor in any form can be employed as compressor 1 so long as it is of a high-pressure shell type in which the inside of a container is in an atmosphere at a discharge pressure (that is, in a state at a high pressure as high as a refrigerant discharge pressure). For example, a single-cylinder rotary compressor, a multi-cylinder rotary compressor, or a scroll compressor can be employed.

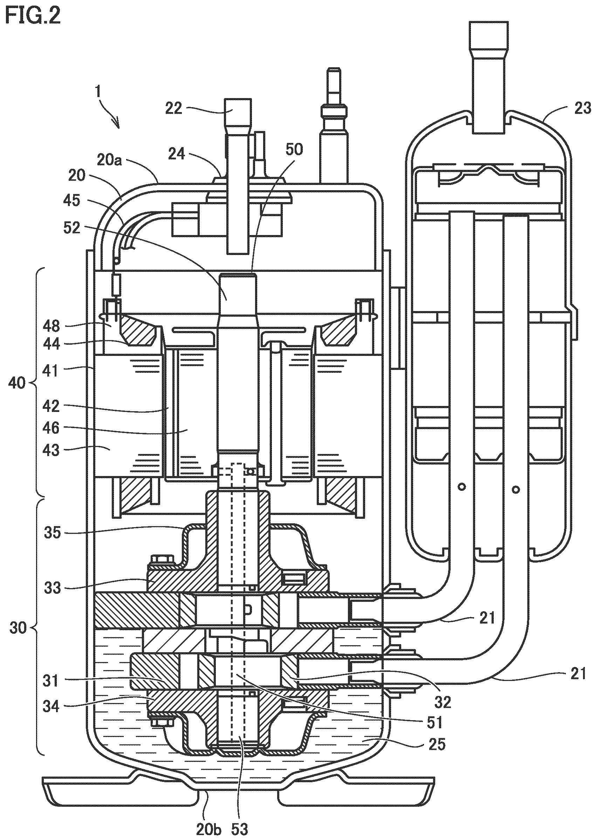

Fig. 2 is a cross-sectional view of compressor 1 according to the first embodiment. Compressor 1 includes a gastight container 20, a compression element 30, a motorizing element 40, and a shaft 50.

Compression element 30 and motorizing element 40 are gas-tightly accommodated in gastight container 20. A suction pipe 21 for suction of refrigerant and a discharge pipe 22 for discharge of refrigerant are attached to gastight container 20.

Gastight container 20 is in a two-way split structure including an upper container 20a and a lower container 20b, which are gas-tightly joined to each other by such a method as arc welding. The gastight container is resistant to a pressure equal to or higher than 20 MPa (G). Even when chain disproportionation reaction occurs and the pressure increases in the inside of the gastight container, the gastight container can maintain safety against a pressure to some extent, without being burst.

Compression element 30 is accommodated in gastight container 20. Specifically, compression element 30 is provided in a lower portion in the inside of gastight container 20. Compression element 30 compresses refrigerant suctioned through suction pipe 21. A position of compression element 30 does not necessarily have to be a position in the lower portion, and in particular in the case of the scroll compressor, the compression element is often accommodated in the upper portion.

Motorizing element 40 is accommodated in gastight container 20. Motorizing element 40 is provided in the lower portion or the upper portion of gastight container 20, although the position is different depending on a form or the like of the compressor. Refrigerant compressed by compression element 30 passes through a flow channel around the motorizing element and thereafter is discharged from discharge pipe 22. Motorizing element 40 drives compression element 30. Motorizing element 40 is a concentrated winding brushless direct-current (DC) motor.

Compressor 1 is filled with compressor oil. Specifically, a bottom portion of gastight container 20 is filled with compressor oil 25 to lubricate a sliding portion of compression element 30. This compressor oil has refrigerant solubility. Details of compressor oil will be described later.

Details of compression element 30 will be described. Compression element 30 includes a cylinder 31, a rolling piston 32, a vane (not shown), a main bearing 33, and a sub bearing 34.

An outer circumference of cylinder 31 is substantially circular in a plan view. In cylinder 31, a cylinder chamber which is a space substantially circular in a plan view is provided. Cylinder 31 has opposing axial open ends.

Cylinder 31 is provided with a vane groove (not shown) that communicates with the cylinder chamber and extends in a radial direction. On the outside of the vane groove, a back pressure chamber which is a space substantially circular in a plan view, the space communicating with the vane groove, is provided.

Rolling piston 32 is in a form of a ring. Rolling piston 32 makes eccentric motion in the cylinder chamber. Rolling piston 32 is slidably fitted to an eccentric shaft portion 51 of shaft 50.

The vane is in a shape of a substantially flat parallelepiped. The vane is provided in the vane groove of cylinder 31. The vane is constantly pressed against rolling piston 32 by a vane spring provided in a rear portion. Since the inside of gastight container 20 is at a high pressure, as operation of compressor 1 is started, force produced by a difference between the pressure in the inside of gastight container 20 and the pressure in the inside of the cylinder chamber is applied to a rear surface of the vane. Therefore, the vane spring is used mainly for the purpose of pressing the vane against rolling piston 32 at the time of start of compressor 1 (when there is no difference in pressure between the inside of gastight container 20 and the inside of the cylinder chamber).

Main bearing 33 is substantially in an inverted T shape in a side view. Main bearing 33 is slidably fitted to a main shaft portion 52 which is a portion above eccentric shaft portion 51 of shaft 50. Main bearing 33 closes the cylinder chamber in cylinder 31 and an upper side of the vane groove.

Sub bearing 34 is substantially in a T shape in a side view. Sub bearing 34 is slidably fitted to a sub shaft portion 53 which is a portion below eccentric shaft portion 51 of shaft 50. Sub bearing 34 closes the cylinder chamber in cylinder 31 and a lower side of the vane groove.

Main bearing 33 includes a discharge valve (not shown). A discharge muffler 35 is attached on the outside of main bearing 33. Gas refrigerant at a high temperature and a high pressure discharged through the discharge valve once enters discharge muffler 35, and thereafter it is emitted from discharge muffler 35 into the space in gastight container 20. The discharge valve and discharge muffler 35 may be provided in sub bearing 34 or in both of main bearing 33 and sub bearing 34.

Discharge muffler 35 is provided with one or more discharge holes (not shown), the discharge hole having a diameter not larger than 10 mm for emission of discharge gas into gastight container 20. When disproportionation reaction occurs in the inside of cylinder 31 due to seizure or the like of a sliding component, reaction should propagate into the gastight container through a narrow flow channel such as a discharge port or the discharge hole. At this time, heat of reaction propagates to peripheral components and hence the temperature lowers and disproportionation reaction is suppressed.

A material for cylinder 31, main bearing 33, and sub bearing 34 is gray iron, sintered steel, carbon steel, or the like. A material for rolling piston 32 is, for example, alloy steel containing chromium or the like. A material for shaft 50 is, for example, spheroidal graphite cast iron. A material for the vane is, for example, highspeed tool steel.

Cylinder 31, main bearing 33, sub bearing 34, rolling piston 32, shaft 50, and the vane described above are sliding components, and combination of materials therefor is designed to prevent seizure at the time of slide against each other, together with a function of compressor oil. Probability of generation of such a high temperature as causing start of disproportionation reaction is thus lowered.

A suction muffler 23 is provided beside gastight container 20. Suction muffler 23 suctions gas refrigerant at a low pressure from refrigeration circuit 5. Suction muffler 23 suppresses entry of liquid refrigerant directly into the cylinder chamber in cylinder 31 when liquid refrigerant returns. Suction muffler 23 is connected to a suction port of cylinder 31 with suction pipe 21 being interposed. A main body of suction muffler 23 is fixed on a side surface of gastight container 20 by welding or the like.

Details of motorizing element 40 will be described. In the present embodiment, any of a concentrated winding brushless direct-current (DC) motor and a motor other than the concentrated winding brushless DC motor (for example, a distributed winding motor or an induction motor) can be employed as motorizing element 40.

Motorizing element 40 includes a stator 41 and a rotor 42. Stator 41 is fixed as being in contact with an inner circumferential surface of gastight container 20. Rotor 42 is provided on an inner side of stator 41 with an air gap approximately from 0.3 to 1 mm being interposed. Discharged refrigerant can pass through this air gap. Since the air gap is narrow, even when disproportionation reaction occurs, heat generated by disproportionation reaction is lost to the stator or the rotor while refrigerant passes through this gap. Therefore, propagation of disproportionation reaction to portions above and below the motorizing element can be suppressed.

Stator 41 includes a stator iron core 43 and a stator winding 44. Stator iron core 43 is manufactured by punching a plurality of electromagnetic steel plates each having a thickness of 0.1 to 1.5 mm in a prescribed shape, layering them in an axial direction, and fixing them by swaging, welding, or the like.

Stator winding 44 is wound around stator iron core 43 by concentrated winding, with an insulating member 48 being interposed. The winding wound by concentrated winding does not have to straddle a slot (not shown) in the stator as in distributed winding, and hence projection (coil end) of an electric wire for the electric wire to reach another slot is not provided above and below the stator. Thus, even when insulation fails, spark or fusing due to conduction between electric wires different in phase which may cause start of disproportionation reaction and resultant generation of a high temperature can be prevented.

Examples of a material for insulating member 48 include polyethylene terephthalate (PET), polybutylene terephthalate (PBT), tetrafluoroethylene/hexafluoropropylene copolymer (FEP), tetrafluoroethylene/perfluoroalkyl vinyl ether copolymer (PFA), polytetrafluoroethylene (PTFE), liquid crystal polymer (LCP), polyphenylene sulfide (PPS), and phenol resin. A lead 45 is connected to stator winding 44.

Insulation by the insulating member is not compromised by melting or the like at least at a temperature (for example, 150°C) at which disproportionation reaction may start to occur. Therefore, even when the pressure and the temperature reach a disproportionation reaction limit, spark or fusing due to conduction between electric wires different in phase which may cause start of reaction and resultant generation of a high temperature can be prevented.

A plurality of elongated notches are provided in a circumferential direction at substantially equal intervals around the outer circumference of stator iron core 43. Each notch serves as one of passages for gas refrigerant emitted from discharge muffler 35 into the space in gastight container 20. Each notch also serves as a passage for compressor oil that returns from the portion above motorizing element 40 to the bottom portion of gastight container 20.

The portions above and below motorizing element 40 communicate with each other through the notches. Since the notch is in the elongated shape, a peripheral length is long relative to an area of the notch. Therefore, even when disproportionation reaction occurs, stator iron core 43 or lower gastight container 20b removes heat of reaction and propagation of disproportionation reaction to the portions above and below motorizing element 40 can be suppressed.

Rotor 42 includes a rotor iron core 46 and a permanent magnet (not shown). Rotor iron core 46 is manufactured by punching a plurality of electromagnetic steel plates each having a thickness of 0.1 to 1.5 mm in a prescribed shape, layering them in the axial direction, and fixing them by swaging, welding, or the like, similarly to stator iron core 43. The permanent magnet is inserted in a plurality of insertion holes provided in rotor iron core 46. For example, a ferrite magnet or a rare-earth magnet is employed as the permanent magnet.

Rotor iron core 46 is provided with a through hole having a diameter not larger than 1/5 of an axial length of rotor 42 and passing through the rotor iron core substantially in the axial direction. Each through hole serves as one of passages for gas refrigerant emitted from discharge muffler 35 into the space in gastight container 20, similarly to the notch in stator iron core 43.

The portions above and below motorizing element 40 communicate with each other also through the through hole. The through hole is sufficiently smaller than an axial length of rotor 42. Therefore, even when disproportionation reaction occurs, rotor iron core 46 removes heat of reaction and propagation of disproportionation reaction to the portions above and below motorizing element 40 can be suppressed.

A power supply terminal 24 (for example, a glass terminal) connected to an external power supply is attached at a top portion of gastight container 20. Power supply terminal 24 is fixed to gastight container 20, for example, by welding. Lead 45 from motorizing element 40 is connected to power supply terminal 24.

Discharge pipe 22 having the opposing axial open ends is attached at the top portion of gastight container 20. Gas refrigerant discharged from compression element 30 is discharged from the space in gastight container 20 through discharge pipe 22 to refrigeration circuit 5 on the outside.

An operation of compressor 1 will be described. Electric power is supplied from power supply terminal 24 through lead 45 to stator 41 of motorizing element 40. Rotor 42 of motorizing element 40 thus rotates. As rotor 42 rotates, shaft 50 fixed to rotor 42 rotates. As shaft 50 rotates, rolling piston 32 of compression element 30 eccentrically rotates in the cylinder chamber in cylinder 31 of compression element 30. A space between cylinder 31 and rolling piston 32 is divided into two spaces by the vane of compression element 30. As shaft 50 rotates, volumes of the two spaces vary. In one space, the volume gradually increases so that refrigerant is suctioned from suction muffler 23. In the other space, the volume gradually decreases so that gas refrigerant therein is compressed. Compressed gas refrigerant is once discharged from discharge muffler 35 into the space in gastight container 20. Discharged gas refrigerant passes through motorizing element 40 and is discharged from discharge pipe 22 at the top portion of gastight container 20 to the outside of gastight container 20.

<<Compressor Oil>>

In the present embodiment, the compressor is filled with compressor oil. Compressor oil is compatible with the second component. "Compressor oil being compatible with the second component" means presence of a temperature at which the second component and compressor oil are not separated into two layers. Thus, a difference in amount of dissolution in compressor oil for each component in refrigerant can be made larger, and a refrigerant component ratio can be varied depending on a temperature and pressure state of refrigerant, a mechanism of which will be described later.

A solubility of the second component in compressor oil is preferably higher than a solubility of the first component in compressor oil. The solubility of the second component in compressor oil being higher than the solubility of the first component in compressor oil means, for example, that the solubility of the second component in compressor oil is higher than the solubility of the first component in compressor oil at each temperature within a range where a degree of superheat of compressor oil is not lower than 10 K and not higher than 60 K. The effect of suppression of disproportionation reaction of HFO-1123 is thus further improved. In addition, an effect of suppression of flammability of refrigerant can be obtained, a mechanism of which will be described below. Though an example in which polyvinyl ether oil (which is also denoted as "PVE oil" below) is employed as compressor oil and propane (R290) is employed as the second component will be described below, the description below is also applicable to the second component other than propane.

Fig. 4 shows a graph of relation between a degree of superheat of compressor oil (PVE oil) and an amount of dissolution of HFO-1123 and propane (R290) dissolved in compressor oil. In the graph, the abscissa represents a degree of superheat [K] of compressor oil and the ordinate represents an amount of refrigerant dissolved in compressor oil, that is, an amount of dissolution of each of HFO-1123 and propane (R290) dissolved in compressor oil, at each degree of superheat.

In the present embodiment, as shown in the graph in Fig. 4, at each degree of superheat within a range where the degree of superheat of compressor oil is approximately not lower than 5 K and not higher than 60 K, the amount of dissolution of R290 which is the second component in compressor oil is larger than the amount of dissolution of HFO-1123 which is the first component in compressor oil. In other words, at each degree of superheat within the range where the degree of superheat of compressor oil is approximately not lower than 5 K and not higher than 60 K, the solubility of the second component in compressor oil is higher than the solubility of the first component in compressor oil. Regarding refrigerant as a whole, as shown in the graph in Fig. 4, as a degree of superheat of compressor oil is lower, the amount of dissolution of refrigerant in compressor oil is larger, and with increase in degree of superheat of compressor oil, the amount of dissolution of refrigerant in compressor oil decreases.

During operation of the refrigeration cycle apparatus, the degree of superheat of gas discharged from compressor 12 is controlled not to abnormally become high (such that the temperature of discharged gas is within a certain range). Therefore, the degree of superheat of compressor oil (which is slightly lower than the degree of superheat of discharge gas) is also controlled to be within a certain range. Under a general operation condition, the degree of superheat of compressor oil is considered as being around 10 K to 30 K. For example, as shown in the graph in Fig. 4, at the degree of superheat of 20 K of compressor oil which represents the general operation condition, the amount of dissolution of R290 in compressor oil is larger than the amount of dissolution of HFO-1123, and much R290 is present in compressor oil. Therefore, the ratio of R290 in refrigerant that circulates through refrigeration circuit 5 is lower than the ratio of R290 in refrigerant at the time of sealing.

R290 which is the second component is flammable. Therefore, when refrigerant contains the second component, refrigerant tends to be more flammable. By employing compressor oil the R290 solubility of which is higher than the HFO-1123 solubility, the ratio of R290 in refrigerant that circulates through refrigeration circuit 5 is low during the operation of the refrigeration cycle apparatus. Therefore, flammability of circulating refrigerant lowers. Thus, even when refrigerant leaks from refrigeration cycle apparatus 10, such an effect as less likeliness of burning and improvement in safety can be obtained.

Since the temperature of discharged gas is controlled to be within a certain range under the general operation condition, there is no possibility of disproportionation reaction under this condition. Therefore, lowering in ratio of R290 high in effect of suppression of disproportionation reaction in refrigerant under the general operation condition does not give rise to a problem.

On the other hand, when a high-temperature and high-pressure condition is set in which the operation condition may become abnormal and disproportionation reaction may occur, the degree of superheat of discharged gas greatly increases and the degree of superheat of compressor oil also greatly increases. For example, as shown in the graph in Fig. 4, at the degree of superheat of 50 K of compressor oil, the solubility of HFO-1123 and R290 in compressor oil generally becomes lower than the solubility in compressor oil at the degree of superheat of 20 K. Furthermore, the difference between the HFO-1123 solubility and the R290 solubility at the degree of superheat of compressor oil of 50 K is also smaller than that at the degree of superheat of compressor oil of 20 K. Therefore, at the degree of superheat of compressor oil of 50 K, a composition of refrigerant that circulates through refrigeration circuit 5 is close to the composition at the time of sealing, and the effect of suppression of disproportionation reaction by R290 which is the second component can sufficiently be obtained.

As set forth above, for example, in the range of the degree of superheat of compressor oil not lower than 10 K and not higher than 60 K, the solubility of the second component in compressor oil is higher than the solubility of the first component in compressor oil, so that the effect of suppression of flammability and the effect of suppression of occurrence and propagation of disproportionation reaction can be obtained.

Compressor oil preferably consists of at least one selected from the group consisting of polyol ester oil, polyvinyl ether oil, mineral oil, and alkylbenzene oil. Naphthene-based mineral oil and paraffin-based mineral oil can be employed as mineral oil. Compressor oil of such a type is higher in solubility of the second component therein than the solubility of the first component therein at each degree of superheat within the range where the degree of superheat of compressor oil is approximately not lower than 5 K and not higher than 60 K.

Compressor oil can consist of one of compressor oils above. Alternatively, compressor oil can consist of at least two of compressor oils above.

Second Embodiment.

A form in which refrigerant contains the third component in addition to the first component and the second component will be described in a second embodiment. The second embodiment can be identical in configuration to the first embodiment other than refrigerant. Therefore, refrigerant will be described below.

<<Refrigerant>>

In the present embodiment, refrigerant contains the third component in addition to the first component and the second component, and the third component preferably consists of at least one selected from the group consisting of refrigerants having a global warming potential not larger than 1000, a flammability class of which is classified into class 1 (no flame propagation) or class 2L (lower flammability) under ISO817: 2014. When the second component is an extremely flammable compound such as propane (R290), refrigerant is flammable. As refrigerant contains the third component which is nonflammable or slightly flammable, flammability of refrigerant can be suppressed. Therefore, on the occurrence of leakage of refrigerant in the refrigeration cycle apparatus, flammability of refrigerant can be suppressed and safety can be enhanced.

The third component preferably consists of at least one selected from the group consisting of 2,3,3,3-tetrafluoro-1-propene (R1234yf), difluoromethane (R32), trans-1,3,3,3-tetrafluoropropene (R1234ze(E)), and cis-1,3,3,3-tetrafluoropropene (R1234ze(Z)). These compounds are nonflammable or slightly flammable, and excellent in effect of suppression of flammability of refrigerant. In addition, these compounds achieve the effect of suppression of disproportionation reaction of HFO-1123. Therefore, as refrigerant contains the third component, the effect of suppression of occurrence and propagation of disproportionation reaction of HFO-1123 is enhanced and safety of the refrigeration cycle apparatus is improved.

The third component can consist of one of the compounds above. Alternatively, the third component can consist of at least two of the compounds above.

The third component preferably does not contain difluoroiodomethane. Since C-I bond of difluoroiodomethane is weaker than C-H bond, C-F bond, and C-Cl bond of conventional refrigerant similarly to trifluoroiodomethane, it is expected to have high metal reactivity, and hence it is not suitable as a component for mixed refrigerant. Refrigerant preferably does not contain difluoroiodomethane.

In the present embodiment, refrigerant can consist of the first component, the second component, and the third component. Refrigerant can contain an impurity in addition to the first component, the second component, and the third component so long as it exhibits the effect in the present disclosure. In other words, in the present embodiment, refrigerant can consist of the first component, the second component, the third component, and the impurity.

When refrigerant consists of the first component, the second component, and the third component, content C1 based on the mass of the first component in refrigerant, content C2 based on the mass of the second component in refrigerant, and content C3 based on the mass of the third component in refrigerant can be set, for example, to (b1) to (b4) below:

(b1) content C1 of the first component is not lower than 65 mass % and not higher than 75 mass %, content C2 of the second component is not lower than 10 mass % and not higher than 20 mass %, and content C3 of the third component is not lower than 5 mass % and not higher than 25 mass %;
(b2) content C1 of the first component is not lower than 75 mass % and not higher than 85 mass %, content C2 of the second component is not lower than 11 mass % and not higher than 17 mass %, and content C3 of the third component is not lower than 1 mass % and not higher than 15 mass %;
(b3) content C1 of the first component is not lower than 50 mass % and not higher than 65 mass %, content C2 of the second component is not lower than 8 mass % and not higher than 13 mass %, and content C3 of the third component is not lower than 22 mass % and not higher than 42 mass %; and

(b4) content C1 of HFO-1123 (first component) is 68 mass %, content C2 of propane (R290, the second component) is 17 mass %, and content C3 of 2,3,3,3-tetrafluoro-1-propene (R1234yf, the third component) is 15 mass %.

Third Embodiment.

A third embodiment can be identical in configuration to the first embodiment and the second embodiment except that the first component of refrigerant consists of trans-1,2-difluoroethylene (R1132(E)). R1132(E) has a structure similar to HFO-1123, inclusive of a molecular structure. Therefore, even when R1132(E) is selected as the first component, the effect as in the first embodiment and the second embodiment can be obtained.

It should be understood that the embodiments and examples disclosed herein are illustrative and non-restrictive in every respect. The scope of the present disclosure is defined by the terms of the claims rather than the description above and is intended to include any modifications within the scope and meaning equivalent to the terms of the claims.

REFERENCE SIGNS LIST

1 compressor; 2 condenser; 3 expansion valve; 4 evaporator; 5 refrigeration circuit; 5a to 5d refrigerant pipe; 6 condenser blower; 7 evaporator blower; 17 controller; 20 gastight container; 20a upper container; 20b lower container; 21 suction pipe; 22 discharge pipe; 23 suction muffler; 24 power supply terminal; 25 compressor oil; 30 compression element; 31 cylinder; 32 rolling piston; 33 main bearing; 34 sub bearing; 35 discharge muffler; 40 motorizing element; 41 stator; 42 rotor; 43 stator iron core; 44 stator winding; 45 lead; 46 rotor iron core; 48 insulating member; 50 shaft; 51 eccentric shaft portion; 52 main shaft portion; 53 sub shaft portion; 100 refrigeration cycle apparatus.

**Claims**

1.  A refrigeration cycle apparatus comprising:

    a refrigeration circuit comprising a compressor, wherein
    refrigerant is sealed in the refrigeration circuit,
    refrigerant contains a first component and a second component,
    the first component consists of 1,1,2-trifluoroethylene,
    the second component consists of at least one selected from the group consisting of hydrocarbon having a carbon number not smaller than 1 and not larger than 5 and fluorinated hydrocarbon having a carbon number not smaller than 1 and not larger than 5,
    a content C1 based on a mass of the first component in refrigerant is not lower than 50 mass %,
    a percentage $(C2/C1) \times 100$ of a content C2 based on a mass of the second component to the content C1 based on the mass of the first component in refrigerant is not lower than 15% and lower than 50%,
    the compressor is filled with compressor oil, and
    compressor oil is compatible with the second component.

2.  A refrigeration cycle apparatus comprising:

    a refrigeration circuit comprising a compressor, wherein
    refrigerant is sealed in the refrigeration circuit,
    refrigerant contains a first component and a second component,
    the first component consists of trans-1,2-difluoroethylene,
    the second component consists of at least one selected from the group consisting of hydrocarbon having a carbon number not smaller than 1 and not larger than 5 and fluorinated hydrocarbon having a carbon number not smaller than 1 and not larger than 5,
    a content C1 based on a mass of the first component in refrigerant is not lower than 50 mass %,
    a percentage $(C2/C1) \times 100$ of a content C2 based on a mass of the second component to the content C1 based on the mass of the first component in refrigerant is not lower than 15% and lower than 50%,
    the compressor is filled with compressor oil, and
    compressor oil is compatible with the second component.

3.  The refrigeration cycle apparatus according to claim 1 or 2, wherein

the second component consists of at least one selected from the group consisting of propane, methane, ethane, butane, isobutane, propylene, fluoromethane, fluoroethane, and 1,1-difluoroethane.

4. The refrigeration cycle apparatus according to any one of claims 1 to 3, wherein

refrigerant further contains a third component, and
the third component consists of at least one selected from the group consisting of refrigerants having a global warming potential not larger than 1000, a flammability class of which is classified into class 1 (no flame propagation) or class 2L (lower flammability) under ISO817: 2014.

5. The refrigeration cycle apparatus according to claim 4, wherein
the third component consists of at least one selected from the group consisting of 2,3,3,3-tetrafluoro-1-propene, difluoromethane, trans-1,3,3,3-tetrafluoropropene, and cis-1,3,3,3-tetrafluoropropene.

6. The refrigeration cycle apparatus according to any one of claims 1 to 5, wherein
a solubility of the second component in compressor oil is higher than a solubility of the first component in compressor oil.

7. The refrigeration cycle apparatus according to claim 6, wherein
compressor oil consists of at least one selected from the group consisting of polyol ester oil, polyvinyl ether oil, mineral oil, and alkylbenzene oil.

8. The refrigeration cycle apparatus according to any one of claims 1 to 7, wherein
the second component does not contain difluoromethane and difluoroiodomethane.

9. The refrigeration cycle apparatus according to any one of claims 1 to 8, wherein
refrigerant does not contain difluoromethane and difluoroiodomethane.

10. The refrigeration cycle apparatus according to claim 4, wherein
the third component does not contain difluoroiodomethane.

11. The refrigeration cycle apparatus according to any one of claims 1 to 10, wherein
refrigerant does not contain difluoroiodomethane.

FIG.1

FIG.2

FIG.3

TEMPERATURE [K] GENERATED AT TIME OF DISPROPORTIONATION REACTION OF HFO-1123

R32 or R290 MIXING RATIO [MASS %]

FIG.4

AMOUNT OF REFRIGERANT DISSOLVED IN COMPRESSOR OIL [MASS %]

DEGREE OF SUPERHEAT OF COMPRESSOR OIL [K]

<div align="center">

**INTERNATIONAL SEARCH REPORT**

</div>

| | International application No. |
|---|---|
| | **PCT/JP2023/011605** |

**A. CLASSIFICATION OF SUBJECT MATTER**

*F25B 1/00*(2006.01)i; *C09K 5/04*(2006.01)i; *C10M 101/00*(2006.01)i; *C10M 105/06*(2006.01)i; *C10M 105/38*(2006.01)i; *C10M 107/24*(2006.01)i; *C10N 40/30*(2006.01)n
FI:  F25B1/00 396Z; C09K5/04 F; C10M101/00; C10M105/06; C10M105/38; C10M107/24; C10N40:30

According to International Patent Classification (IPC) or to both national classification and IPC

**B. FIELDS SEARCHED**

Minimum documentation searched (classification system followed by classification symbols)

F25B1/00; C09K5/04; C10M101/00; C10M105/06; C10M105/38; C10M107/24; C10N40/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-161316 A (PANASONIC INTELLECTUAL PROPERTY MANAGEMENT CO., LTD.) 11 October 2021 (2021-10-11)<br>paragraphs [0050], [0058], [0067], [0071]-[0072], fig. 1(A) | 1-11 |
| Y | JP 2018-138867 A (MITSUBISHI ELECTRIC CORP) 06 September 2018 (2018-09-06)<br>paragraphs [0024]-[0025] | 1-11 |
| Y | JP 2020-38014 A (PANASONIC INTELLECTUAL PROPERTY MANAGEMENT CO., LTD.) 12 March 2020 (2020-03-12)<br>paragraphs [0040]-[0041] | 8-11 |
| Y | JP 2017-145380 A (PANASONIC INTELLECTUAL PROPERTY MANAGEMENT CO., LTD.) 24 August 2017 (2017-08-24)<br>paragraph [0010] | 8-11 |
| Y | JP 2018-048271 A (PANASONIC INTELLECTUAL PROPERTY MANAGEMENT CO., LTD.) 29 March 2018 (2018-03-29)<br>paragraph [0009] | 8-11 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/011605**

| C. | DOCUMENTS CONSIDERED TO BE RELEVANT | |
|---|---|---|
| Category* | Citation of document, with indication, where appropriate, of the relevant passages | Relevant to claim No. |
| A | JP 2009-138957 A (HITACHI APPLIANCES INC) 25 June 2009 (2009-06-25) paragraph [0029] | 1-11 |

Form PCT/ISA/210 (second sheet) (January 2015)

INTERNATIONAL SEARCH REPORT
Information on patent family members

International application No.

**PCT/JP2023/011605**

| Patent document cited in search report | | | Publication date (day/month/year) | Patent family member(s) | | | Publication date (day/month/year) |
|---|---|---|---|---|---|---|---|
| JP | 2021-161316 | A | 11 October 2021 | CN 115397943 paragraphs [0063], [0071], [0081], [0086]-[0087], fig. 1(A) | A | | |
| JP | 2018-138867 | A | 06 September 2018 | (Family: none) | | | |
| JP | 2020-38014 | A | 12 March 2020 | (Family: none) | | | |
| JP | 2017-145380 | A | 24 August 2017 | (Family: none) | | | |
| JP | 2018-048271 | A | 29 March 2018 | (Family: none) | | | |
| JP | 2009-138957 | A | 25 June 2009 | KR 10-2010-0087200 paragraph [0049] CN 101883957 | A A | | |

Form PCT/ISA/210 (patent family annex) (January 2015)

**REFERENCES CITED IN THE DESCRIPTION**

**Patent documents cited in the description**

- WO 2012157764 A

- JP 2018112396 A